Europäisches Patentamt

**European Patent Office**

Office européen des brevets

(19)

(11) Publication number: **0 259 208**
A2

(12)

# EUROPEAN PATENT APPLICATION

(21) Application number: **87401822.9**

(22) Date of filing: **06.08.87**

(51) Int. Cl.³: **B 60 T 15/36**

(30) Priority: **06.08.86 US 893666**

(43) Date of publication of application:
**09.03.88 Bulletin 88/10**

(84) Designated Contracting States:
**DE FR**

(71) Applicant: **Russell, Carl D.**
30 Ramm's Court
Sallisaw Oklahoma 74955(US)

(72) Inventor: **Russell, Carl D.**
30 Ramm's Court
Sallisaw Oklahoma 74955(US)

(74) Representative: **Lemoine, Michel et al,**
Cabinet Michel Lemoine et Bernasconi 13 Boulevard des Batignolles
F-75008 Paris(FR)

(54) Intermittent vehicular braking apparatus.

(57) A valve arrangement positionable between the brake pedal (600) and the brake actuators (700) in an air braking system provides for the automatic response to braking pressures to produce intermittent on/off braking above a predetermined braking threshold. It operates solely from the air braking line (1) pressure controlled by the brake pedal (600) by means of a reciprocating shuttle piston (80,90) that intermittently produces braking pressures within a braking chamber (165). A sliding rod (80) controls by flange (80') exhaust to atmosphere through ports (155) as the shuttle piston reciprocates, when a threshold sensing plunger (135) is urged into position to intercept and urge the shuttle piston toward a main valve (35) passing the braking pressure into the chamber (165). The shuttle piston returns with the same braking pressure in chambers (165 and 170) on opposite ends thereof because of different areas on the opposite ends of the piston. As the braking pressure increases, the threshold plunger (135) shortens the reciprocating stroke of the shuttle piston and increases the on/off frequency of the braking.

EP 0 259 208 A2

./...

Fig:1

# INTERMITTENT VEHICULAR BRAKING APPARATUS

## FIELD OF THE INVENTION

The invention relates, in general, to a valving arrangement, and more particularly, to an anti-skid vehicular air braking system, wherein the brakes are selectively applied and released several times per second under control of pedal governed air pressure without any electrical or electronic apparatus.

## BACKGROUND OF THE INVENTION AND PRIOR ART

Presently, certain of the more expensive makes of automobiles are being sold with electrically controlled, intermittent, hydraulic braking systems. In general, heavier vehicles such as trucks and the larger or heavy-duty pickups, using computer controlled intermittent air brakes, require complex independent control of the application and release of brake shoes at each wheel, and thus are not economically successful. However, my U.S. Patent 4,538,859 issued September 3, 1985 provides an on/off air braking system which interrupts the main high pressure line with electrically controlled valving, thereby avoiding the

2

complexities of independent wheel monitoring.

BRIEF SUMMARY OF THIS INVENTION

The present invention avoids all electrical and electronic controls, but provides on/off control by virtue of a shuttle piston mounted for reciprocating movement and operating a shuttle exhaust valve for intermittently releasing braking pressure from a main high pressure air braking line in one direction of movement. In the other direction of movement, the exhaust is closed to permit braking pressure from the high pressure line.

The shuttle piston is driven in opposite directions by the air pressure in the braking line when the air braking pressure exceeds a predetermined level indicating an emergency stop. This is achievable in part by having two ends of the piston with different areas confronting the applied air pressure so that force applied to one end is greater than the force applied to the other end when the pressure is equal. Pressure is exhausted at the larger end of the shuttle piston by means of an exhaust valve opened and closed as the piston shuttles back and forth.

When the foot pedal pressure is high for emergency stopping, the exhaust valve is opened by the braking pressure force on a spring biased plunger for moving the shuttle piston away from the position with the exhaust valve closed. This initiates the shuttling of the shuttle piston resulting in intermittent braking fully achieved by the air in the braking system without electric systems. The shuttling is terminated by reduction of the braking air pressure which restores the shuttle piston to a rest position with the exhaust valve closed, so that normal braking occurs for gentle stops with less than the predetermined threshold value of braking air pressure involved.

BRIEF DESCRIPTION OF THE DRAWINGS

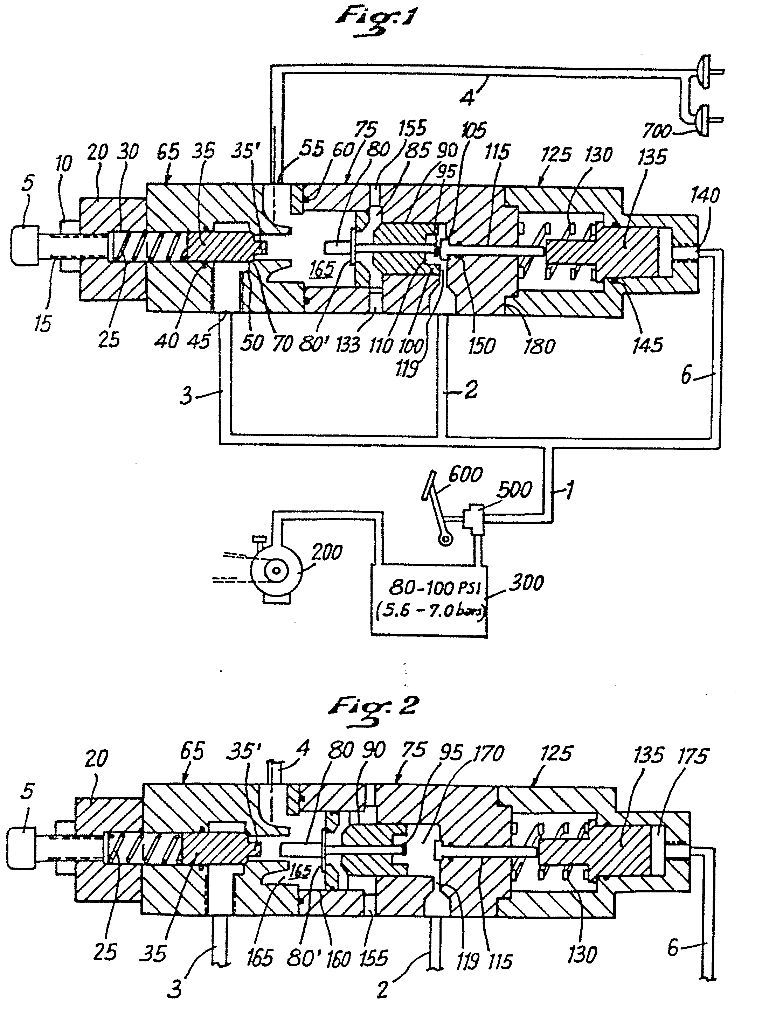

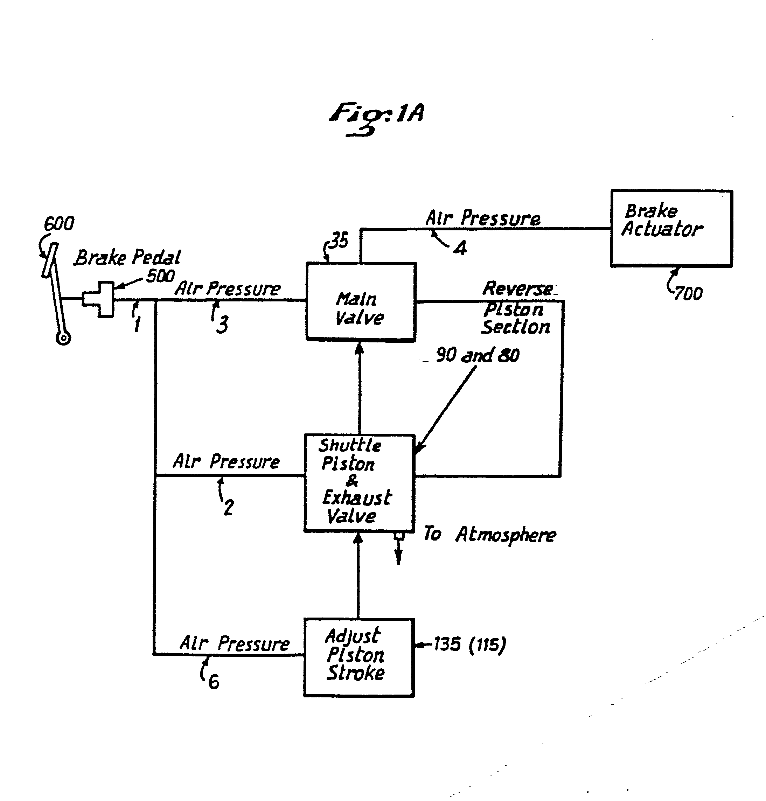

FIGURE 1A is a schematic representation illustrating certain principles of the invention ;

FIGURE 1 is a cross section sketch of the intermittent braking apparatus afforded by this invention with the movable valve parts in a position awaiting application of the brakes to initiate its operation ; and,

FIGURE 2 shows the valve parts in an intermediate position assumed when air braking pressure is received in response to movement of the brake pedal.

PREFERRED EMBODIMENT OF THE INVENTION

The present invention provides an air pressure operable device that may be installed in the existing air pressure path extending between the conventional foot operated brake pedal and accompanying air pressure regulator valve and the brake shoe actuator cylinders. This arrangement provides a continuous air pressure path for normal or gentle braking, but after a braking air pressure threshold is exceeded, such as for emergency stopping, it will initiate intermittent braking or change the frequency of intermittent braking. The preferred construction of this device comprises a housing of aluminum developed in separable parts to simplify casting, molding or machining. These parts are fastened and sealed together, such as by means of bolts and O-rings. The housing is preferably cylindrical with internal movable parts concentrically located therein in a fluid control path for response to the air braking pressure of a closed braking system.

In Figure 1A, any slight pressure applied to brake pedal 600 opens pressure regulator valve 500 to apply main line pressure from line 1 over the main braking line 3 to main line braking valve piston 35. This applies air pressure over brake actuating line 4 to the brake actuators 700.

Main line valve 35 is opened by movement of the shuttle piston 80,90 in response to main line air pressure applied over line 2 and available whenever brake pedal 600 is operated. This causes the shuttle piston 80,90 to move

4

into a direction impacting the main valve 35, which is spring biased to a closed direction, and open it slightly. Then air rushes in from line 3 to rapidly and fully open the valve 35 for actuation of the brakes along line 4. This air rush in turn drives the shuttle piston 80,90 backward against the air pressure in line 2, which is possible since the area of the end of the shuttle piston facing the main valve 35 receiving air pressure from line 3 is larger than the end receiving air pressure from line 2.

FLOATING PISTON ASSEMBLY

In Figure 1 valve 35 is normally closed due to spring 25 urging it to the right hand position shown. If the driver heavily engages brake pedal 600, main line air pressure from tank 300 maintained by compressor 200 will cause air to flow. Thus air passes through partly opened regulator valve 500 into conduit 1 and by way of conduit 6 through opening 140 to push piston 135 and its stem 115 against the shuttle piston 80,90. This releases it from the inactive position, letting it pass through chamber 165. The impact of stem 115 against the shuttle piston 80,90 then bounces it enough to the left to open up exhaust passages 155 and prevent its bias toward the right to seal the exhaust passages because of the main line braking pressure at line 2 against the smaller end of the shuttle piston 80,90. Thus the shuttle moves rapidly toward the main valve 35 where its stem 80 will strike the main valve 35 and move it to the left against the pressure of spring 25 to thereby open valve 35 and quickly return the shuttle piston to try and close the exhaust ports 155. Movement of the shuttle piston in its shuttle action in this case is controlled by an impact from piston 135 at the right end where it bounces back to exhaust the chamber 165 and move back again into contact with main valve stem 35'.

The shuttle piston 80,90 moves to the right in compartment 165 when equal pressure is at opposite sides of

5

it, because of the larger area of the piston end within the cylinder of compartment 165 than that within compartment 170 (Fig. 2). This causes a greater force effective over the larger area and moves the piston to the right.

However, upon the initiation of the braking cycle, piston 35 operates as a valve to close passage 45,50, so that there is no main line air from line 3 flowing into chamber 165, which has been exhausted by means of exhaust apertures 155. Also shuttle piston 80,90 blocks the flow of air through line 2 in the return movement of the shuttle piston. Thus this air pressure in line 2 can no longer produce a force on the shuttle piston causing movement toward valve 35 so that stem 80 strikes stem 35', unless the exhaust valve opens a path to atmosphere through openings 155 as is done by impact of the shuttle piston 80,90 by plunger 115 under emergency braking conditions. Once the main line valve piston 35 is opened a crack, the pressure from line 3 will keep it open during the braking cycle and the flow into line 4 to brake actuators 700 effects the braking.

The rush of air into chamber 165 then pushes the shuttle piston 80,90 to the right. With gentle braking this action simply slams the shuttle piston back to the right hand position with the exhaust valve closed allowing the pressure from line 3 to maintain the pressure in chamber 165 and at brake applicators 700 for a stable positioning until the braking pressure either is released from actuation of pedal 600 or increased to emergency proportions.

When the brakes are applied hard, such as in an emergency, for example when pressure exceeds 60 psi (4.2 bars), the intermittent shuttling of the shuttle piston 80,90 takes place. In the rightmost position of the shuttle piston 80,90, the exhaust apertures 155 venting the chamber 165 are closed. However when the plunger 115 forces shuttle piston 80,90 to the left the exhaust passage for chamber 165 is opened by way of the exhaust apertures 155. This occurs

Neu eingereicht / …/ …
Nouvelle …

6

when the movable shaft 80 removes flange 80' to the left from its seat closing the exhaust vent. Brake actuators then relax and valve 35 recloses line 3 temporarily until the exhaust passages are reclosed and the cycle is repeated by return movement of the shuttle piston 80,90.

The pressure is still present in chamber 170 from line 2 exerted on the small end of the piston when the shuttle piston bounces off valve 135 extension 115 during emergency braking. Thus the shuttle piston 80,90 moves to the left until plunger 80 strikes plunger 35' on valve piston 35. This returns the high pressure into chamber 165 from line 3, slamming open valve piston 35 and driving the shuttle piston 80,90 to the right. As long as the plunger 115 is protruding into the chamber 170 sufficiently for the impact by the shuttle valve 80,90, the intermittent travel of the shuttle piston will continue to provide this on/off braking to actuators 700.

The harder the brake pedal 600 is depressed, the greater the pressure in line 6 and the greater the displacement of plunger 115 making the stroke of the shuttle piston 80,90 shorter. In this way this invention automatically regulates the frequency of the on/off intermittency of the braking to provide maximum antiskid protection. It has been found that this type action will stop a truck on dry pavement faster, perhaps requiring 7% less distance. It is even more advantageous on mud, snow, ice or wet pavement. Thus any time this type of braking is needed, the brake pedal is simply pressed harder, which is a normal reaction. Jackknifing can thus be reduced, and more effective braking on sharp curves is feasible.

PREFERRED CONSTRUCTION

A working model for handling a heavy-duty pickup with air brakes typically comprises the following construction details. The housing is made in multi-parts 20, 65, 75, and 125 of high grade aluminum and steel parts to form a cylindrical housing of 2.5 inches (6.3 cm) diameter and 11.75 inches (29.8 cm) in length.

The typical construction techniques now set forth may be advantageous. The cap 20 for valve 35 is center bored, and threaded for a valve bias adjustment screw 5, provided with lock nut 10. The valve body 65 is drilled along its axis and counter bored to produce a 60 degree ground seat finished for sliding and sealing. The lines connections are provided by drilling and tapping tapered pipe threads. The facings are finished suitable for O-ring sealing, 60.

Valve 35 is of high grade steel fitted to the valve body and finished for sliding and sealing with the ground and hardened 60 degree seat 70. A reduced diameter tip 35' is formed. Cylinder 75 may be of high grade aluminum bored 160 along its axis and finished for sliding. A bore for plunger 115 is made in the opposite end together with a seat for the plunger head 105. Two of eight exhaust ports 155 from the atmosphere to cylindrical bore surface 160 are shown about the cylinder 75.

Valve 80 is a high grade steel valve with flange 80' of larger diameter finished for seating against piston 90. A retainer ring 95 holds this valve 80 axially movable within bored piston 90 provided with a sliding finish.

Piston 135 is of high grade aluminum finished suitable for sliding and sealing in cylinder 125 of high grade aluminum. Spring 25 is for light duty with one pound (.5 kg) tension. Spring 130 is a medium high pressure spring 1.5 inches (3.8 cm) long with a maximum deflection of 37% and a load of 66 pounds (33 kg).

In order to allow time for the air in chamber 165 to exhaust by means of flange valve 80' and the eight passages 155, it is necessary to so restrict air flow into chamber 170 at 119. For air to escape from chamber 165, it is necessary for : (1) valve 35 to be closed, sealing off high pressure input air ; (2) valve flange 80' to be open ;

and (3) exhaust of chamber 165 need be completed before the piston 90 has completed its forward stroke, caused by action of air pressure in chamber 170 on the rear end 95 of the valve member 80, and thus before the striking of main valve stem 35' operates to reclose the flange 80'. This assures complete release of the brakes before the next intermittent braking impulse.

The plunger 115 opens the exhaust by means of moving valve 80 flange 80' away from its seat as shown in Figure 1 and then the pressure in compartment 170 on the smaller end of the piston 80,90 moves the plunger 80 into the main valve stem 35' when the passage 45 and 50 is closed by the main valve 35 by means of the bias spring 25.

9

CLAIMS

1. An intermittent braking system for vehicles operable from air braking pressure controlled by a brake pedal to control braking actuators on the vehicles, characterized by : a shuttle piston for reciprocation in a chamber between a main valve for controlling brake pressure to the actuators and threshold means for initiating an intermittent reciprocation in response to air braking pressure above a predetermined threshold, an air line from the chamber for exerting braking pressure at the actuators, a valve for retaining and exhausting pressure in the chamber in response to reciprocation of the shuttle piston, thereby to produce intermittent on/off braking impulses to the actuators when the shuttle piston reciprocates, means for producing air braking pressure in said chamber and a further compartment on the opposite end of the shuttle piston bearing on respective areas of differing size on the respective ends thereby to permit the piston to move in one direction in response to air pressure of equal magnitude in the two compartments, means for operating the main valve to enter air braking pressure into said chamber upon impact by said shuttle travelling in one direction, means for returning the shuttle piston in the opposite direction in response to the air pressure at both ends of the shuttle piston to a stable position with the exhaust valve closed, and means for urging the piston away from its stable position towards the main valve by said threshold means with an open exhaust valve when the braking pressure exceeds said threshold.

2. The system of Claim 1 further characterized by means for controlling the frequency of the shuttle piston reciprocation in response to the magnitude of the braking pressure.

3. The system of Claim 1 further characterized by threshold means comprising a resiliently biased subjected to braking pressure to overcome the bias.

4. The system of Claim 1 further characterized by a shuttle piston comprising a rod slidable through a piston body carrying a flange for opening and closing an exhaust outlet path to the atmosphere.

5. The system of Claim 1 further characterized by a movable main valve member spring biased to block braking air pressure from said chamber and movable by impact of the shuttle piston to open up a passage for braking air pressure into the chamber with the movable member thereby urged against the spring bias by the braking air pressure in the chamber.

6. The systme of Claim 1 further characterized by an assemblage of several housing parts connected together along the axis of a generally cylindrical body formed thereby.

1/2

**Fig.1**

80-100 PSI
(5.6 - 7.0 bars)

**Fig.2**

0 259 208

## Fig:1A

Brake Pedal 500

Air Pressure 3

Main Valve 35

Air Pressure 4

Brake Actuator 700

600

Air Pressure 1

Reverse Piston Section

90 and 80

Shuttle Piston & Exhaust Valve

Air Pressure 2

To Atmosphere

Adjust Piston Stroke 135 (115)

Air Pressure 6